# EUROPEAN PATENT APPLICATION

(11) **EP 2 076 079 A1**
(43) Date of publication of application: **01.07.2009**
(21) Application number: 08021286.3
(22) Date of filing: 08.12.2008
(51) Int. Cl.: H04W 48/12

(54) **Apparatus and method for managing channel capacity and DECT base station for the same**

(30) Priority: 28.12.2007 KR 20070140953
(71) Applicant: LG - Nortel Co., Ltd., 679, Yeoksam-dong Gangnam-gu Seoul (KR)
(72) Inventor: Choi, Ji, Young, Seongnam-si Gyeonggi-do 463-745 (KR)
(74) Representative: Katérle, Axel

(57) **Abstract**

Wireless channel capacity of a digital enhanced cordless telecommunication (DECT) base station may be expanded by selecting an unused timeslot from a plurality of timeslots of a downlink channel. A dummy bearer may be created in a corresponding timeslot and it may be determined whether a traffic bearer is created in an unused timeslot. If so, the dummy bearer may be removed, and dummy bearer information may be periodically transmitted to a handset through a traffic bearer on every frame. Dummy bearer information may be inserted into a header of the traffic bearer, and the previously created dummy bearer may be removed after the insertion is completed. Usage of the timeslot occupied by the dummy bearer may be changed to voice communication. When the traffic bearer is released, the dummy bearer may be re-created, and dummy bearer information may be periodically transmitted to the handset through the re-created dummy bearer on every frame.

## Description

The present application claims priority from Korean Patent Application No. 10-2007-140953, filed December 28, 2007, the subject matter of which is incorporated herein by reference.

### BACKGROUND

### 1. Field

Embodiments of the present invention may relate to wireless communication. More particularly, embodiments of the present invention may relate to an apparatus and method for managing a wireless channel in a wireless communication device.

### 2. Background

Communication between remote devices may use a communication protocol that enables devices to resolve which of them may transmit at any given time and which of them may receive at any given time. One protocol is the Digital European Cordless Telecommunications (DECT) protocol developed by the European Telecommunications Standards Institute (ETSI). The DECT protocol includes provision for time division multiplexing between a base station and a mobile, with each time frame including a base transmission portion and a mobile transmission portion divided into time slots. During the base transmission portion, the base station may transmit in each time slot to a mobile user. During the mobile transmission portion, each mobile user may transmit in an assigned time slot back to the base station. Information regarding the DECT system may be provided in publication ETR 015 (March 1991) published by ETSI.

The DECT protocol may be utilized in a private branch exchange system for a plurality of users in an office, a home, etc. A private branch exchange DECT system may include an Internet Protocol (IP) key phone apparatus, at least one base station (BS), and a plurality of handsets (DECT terminals) that communicate with the BS in a wireless manner. For a multiplex access between the BS and the handsets, a time division multiple access (TDMA) scheme may be used, and a time division duplex (TDD) scheme may be used for a duplex communication.

The BS may periodically transmit dummy bearer information to the handset in order to transmit information on synchronization between the BS and the handset, information on identification (ID) of the BS to which the handset is to be connected, a paging signal for calling the handset, and the like. The BS may always occupy one wireless channel to transmit the dummy bearer information. More particularly, when expansion of a wireless cell coverage is required in an office environment or the like, where a plurality of BSs may be installed in a wide area, one BS should occupy one wireless channel to transmit the dummy bearer information so that wireless channels as many as the number of BSs are needed. Accordingly, as the number of BSs increases, the dummy bearer information transmitted by the BS may also increase so that a maximum available wireless channel capacity decreases. Occupation of timeslots by the BSs for transmitting the dummy bearer information may cause a problem of decreasing available wireless channels required by the handsets.

### BRIEF DESCRIPTION OF THE DRAWINGS

Embodiments may be described in detail with reference to the following drawings in which like reference numerals refer to like elements and wherein:

FIG. 1 is a view showing a DECT system according to an example embodiment of the present invention;

FIG. 2 is a view showing a structure of a DECT frame for transmitting and receiving signals between DECT base stations and handsets of FIG. 1;

FIG. 3 is a view showing an internal configuration of the DECT base station of FIG. 1;

FIG. 4 is a view showing an internal configuration of a control unit of FIG. 3;

FIG. 5 is a flowchart showing a method of expanding channel capacity of a DECT base station according to an example embodiment of the present invention; and

FIG. 6 is a view showing a structure of a channel (timeslot) of FIG. 2.

### DETAILED DESCRIPTION

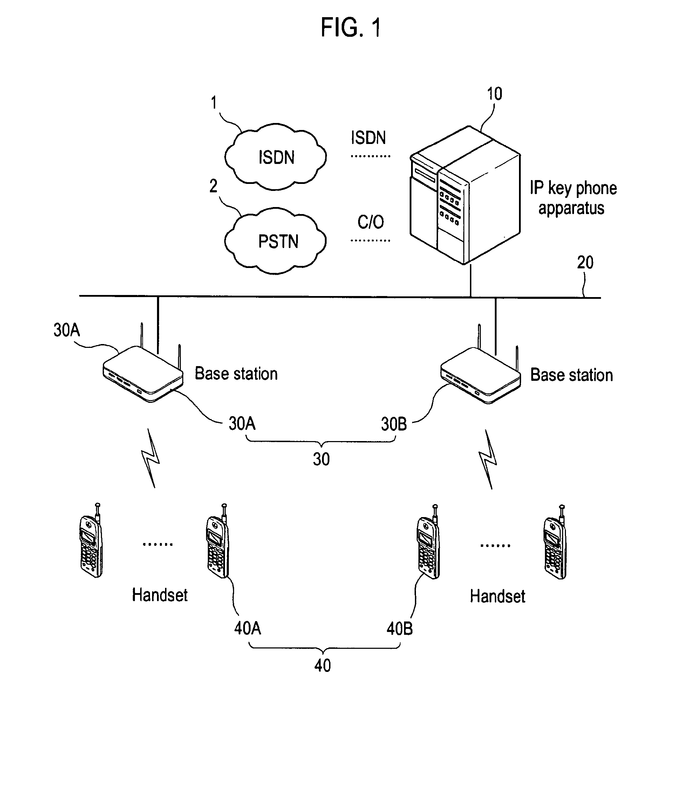

FIG. 1 is a view showing a DECT system according to an example embodiment of the present invention. Other embodiments and configurations are also within the scope of the present invention. More specifically, FIG. 1 shows a digital enhanced cordless telecommunication (DECT) system that includes an IP key phone apparatus 10, a wireless terminal interface board (WTIB) 20, a plurality of base stations (BSs) 30, and handsets (DECT terminals) 40. The base station 30 may be an apparatus for managing channels. The apparatus for managing channels is not limited to a base station of a wireless communication system. For example, a base station controller may be the apparatus for managing channels according to configuration of the wireless communication system.

The IP key phone apparatus 10 for providing a DECT service may be connected to an integrated services digital network (ISDN) 1 and a public switched telephone network (PSTN) 2.

The WTIB 20 is a board for interfacing the BS 30 with the IP key phone apparatus 10. The WTIB 20 may collect signals transmitted from the plurality of BSs 30 at regular intervals and transmit the collected signals to the IP key phone apparatus 10. The WTIB 20 may receive a signal for calling a specific handset 40A from the IP key phone apparatus 10, which also receives the signal through the ISDN 1 or the PSTN 2, and transmits the signal to the BS 30A. A signal originated from a handset 40B may be transmitted to the WTIB 20 through the BS 30B, and the WTIB 20 may transmit the signal to the IP key phone apparatus 10, which transmits the signal to the ISDN 1 or the PSTN 2. The WTIB 20 may convert a signal transmission rate between the base stations 30 and the IP key phone apparatus 10. For example, the WTIB 20 may receive signals from the IP key phone apparatus 10 at a rate of approximately 2.048 Mbps and the WTIP 20 may transmit the signal to a corresponding BS 30 at a rate of approximately 64 Kbps.

The DECT system may adopt a time division multiple access (TDMA) scheme for multiplex access between the BS 30 and the plurality of handsets 40. The BS 30 and the handset 40 may select one timeslot from among a plurality of timeslots configuring a frame as a corresponding wireless channel when the BS 30 and the handset 40 communicate with each other, and the BS 30 and the handset 40 may transmit and receive signals through the corresponding wireless channel.

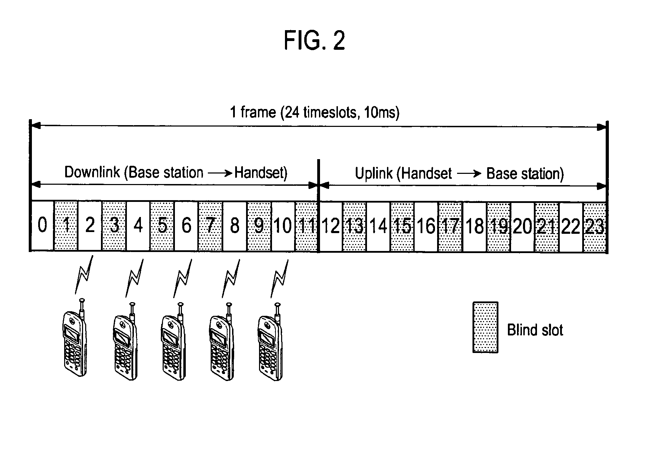

FIG. 2 is a view showing a structure of a DECT frame for transmitting and receiving signals between the BS 30 and the handsets 40 of FIG. 1. Other embodiments and configurations are also within the scope of the present invention. As shown, one DECT frame may include 24 timeslots. The timeslots may discriminate data in accordance with time. With timeslots, characters, character groups or data between channels may be discriminated. The timeslots in a frame may be allocated to users (handsets) on a one-to-one basis with the wireless channels. In FIG. 2, 12 timeslots (e.g., timeslots 0 to 11) of the 24 timeslots configure a downlink interval for transmitting data from the BS 30 to the handsets 40, and the other 12 timeslots (e.g., timeslots 12 to 23) configure an uplink interval for transmitting data from the handsets 40 to the BS 30. Accordingly, uplink or downlink may be performed with a maximum of 12 wireless channels per frequency. If the number of available frequencies is 10 (f0 to f9), then the number of wireless channels that can be physically used at one time is 120.

The handset 40 may search for a received signal strength indication (RSSI) of all available frequencies of a corresponding timeslot that the handset 40 can occupy in advance. The frequency search may be performed through odd-numbered timeslots, and the odd-numbered timeslots may be named as blind slots that are not available. Accordingly, actually available timeslots (wireless channels) are even-numbered timeslots, and a maximum number of the wireless channels is approximately 60. The handset 40 may select a timeslot that is not occupied by the other handsets (i.e., an unused timeslot) from among the even-numbered timeslots. The handset 40 may use the selected timeslot as the wireless channel.

In an example embodiment, one DECT frame has a length of approximately 10 ms and includes 24 timeslots. Since the DECT system adopts the TDD scheme as a duplex scheme, 12 timeslots (e.g., timeslots 0 to 11) of the 24 timeslots may be used as wireless channels for downlink transmission and the remaining 12 timeslots (e.g., timeslots 12 to 23) may be used as wireless channels for uplink transmission. Since the odd-numbered timeslots (i.e., blind slots) of the uplink and downlink wireless timeslots (e.g., timeslots 1, 3, 5, 7, 9, 11, 13, 15, 17, 19, 21 and 23) are used for a frequency search, the even-numbered timeslots (e.g., timeslots 0, 2, 4, 6, 8, 10, 12, 14, 16, 18, 20 and 22) of the downlink channel and the uplink channel are available wireless channels. When the BS 30 may communicate with the handset 40, the BS 30 may transmit a voice signal to the handset 40 through the downlink channel, and the handset 40 may transmit a voice signal to the BS 30 through the uplink channel.

One of the even-numbered timeslots of the downlink channel (e.g., timeslots 0, 2, 4, 6, 8, and 10) may be used for the BS 30 to broadcast dummy bearer information to the handsets 40. The dummy bearer information may include information on synchronization between the BS 30 and the handset 40, information on an ID of the BS 30 to which the handset 40 to be connected, a paging signal for calling the handset 40, and information on a message exchange with the handset 40 or the like. The dummy bearer information may be periodically broadcasted by the BS 30 at every frame (10 ms). The handset 40 may synchronize with the BS 30 and check authority for connection thereto or the handset 40 may maintain a standby mode state until the BS 30A calls.

If the handset 40 in the standby mode state receives the dummy bearer information and recognizes itself to be called, the handset 40 may occupy one of the unused (empty) timeslots of the even-numbered timeslots of the uplink channel at every frame (10 ms). The handset 40 may transmit a call response signal to the BS 30 through an occupied timeslot (i.e., an occupied wireless channel).

A dummy bearer may be created in a timeslot of the downlink channels to transmit the dummy bearer information to the handset 40, and a traffic bearer may be created in the timeslot of the downlink channel or the uplink channel for the BS 30 to transmit a voice signal to the handset 40 or for the handset 40 to transmit an originating signal to the BS 30. In an initialization process or in case of absence of a traffic bearer, the dummy bearer information may be transmitted through the dummy bearer. If it is detected (or determined) that a traffic bearer has been created in the downlink channel, the BS 30 may insert the dummy bearer information into a header of the traffic bearer and transmit the dummy bearer information through the traffic bearer. When the traffic bearer is released, the dummy bearer may be re-created, and dummy bearer information may be transmitted through the dummy bearer. In this manner, the number of occupied timeslots to transmit dummy bearer information may decrease, and thus the number of available wireless channels used by the handset 40 may increase.

In initialization process, the BS 30 may select one of the empty timeslots (e.g., selects a timeslot having the smallest RSSI) from among the even-numbered timeslots of the downlink channel in a frame and the BS 30 may create a dummy bearer in the selected timeslot. The dummy bearer information may be transmitted through the dummy bearer. When an event is generated, the BS 30 may select one of the empty timeslots (that are not occupied for communication with other handsets) from among the even-numbered timeslots of the downlink channel of a frame to create a traffic bearer. For example, when the BS 30 calls the handset 40 and receives a response signal from the handset 40 or the BS 30 receives an originating signal from the handset 40, the BS 30 may select one of the empty timeslots (having a smallest RSSI) from among the even-numbered timeslots of the downlink channel of a frame. The dummy bearer information may be inserted and transferred from the dummy bearer to the header of the traffic bearer by the BS 30. Thus, the dummy bearer information may be transmitted to the handset 40 through the traffic bearer, and the dummy bearer may be removed because it is useless. When the traffic bearer is released, the BS may re-create the dummy bearer to transmit the dummy bearer information. On the other hand, when no event is generated, the dummy bearer information may be transmitted through the dummy bearer.

In the initialization process, the BS 30 may measure RSSIs of the even-numbered timeslots (e.g. timeslots 0, 2, 4, 6, 8, and 10) of the downlink channel, and a result of the RSSI measurement may be used to select a timeslot having the smallest RSSI from among the empty timeslots. The BS 30 may create a dummy bearer in the selected timeslot and transmit the dummy bearer information through the dummy bearer. When an event is generated, the BS 30 may measure RSSIs of all the timeslots and select a timeslot having the smallest RSSI from among the empty timeslots based on a result of the RSSI measurement. The BS 30 may create a traffic bearer in the selected timeslot and transmit dummy bearer information through the traffic bearer. At this time, the BS 30 may remove the previously created dummy bearer, and re-create the dummy bearer when the traffic bearer is released, to transmit the dummy bearer information through the re-created dummy bearer. The BS 30 may determine a timeslot having an RSSI value smaller than a reference value as an empty timeslot, and the BS 30 may store and manage channel state information related to setting the dummy bearer and the traffic bearer in real time. More specifically, the BS 30 may periodically confirm whether a traffic bearer is set in at least one of the even-numbered timeslots of the downlink channel, and if a traffic bearer is set (i.e., when a traffic bearer is set due to generation of an event), the BS 30 may insert dummy bearer information in the timeslot, in which the traffic bearer is set, and transmit the dummy bearer information through the traffic bearer. The BS 30 may remove the previous dummy bearer (a previously created dummy bearer) and change usage of the timeslot occupied by the dummy bearer to voice communication. If the traffic bearer having the inserted dummy bearer information is released (i.e., when the traffic bearer is released due to termination of the event), the BS 30 may select a timeslot having the smallest RSSI signal, re-create the dummy bearer in the corresponding timeslot, and transmit dummy bearer information through the dummy bearer, in a same manner as the initialization.

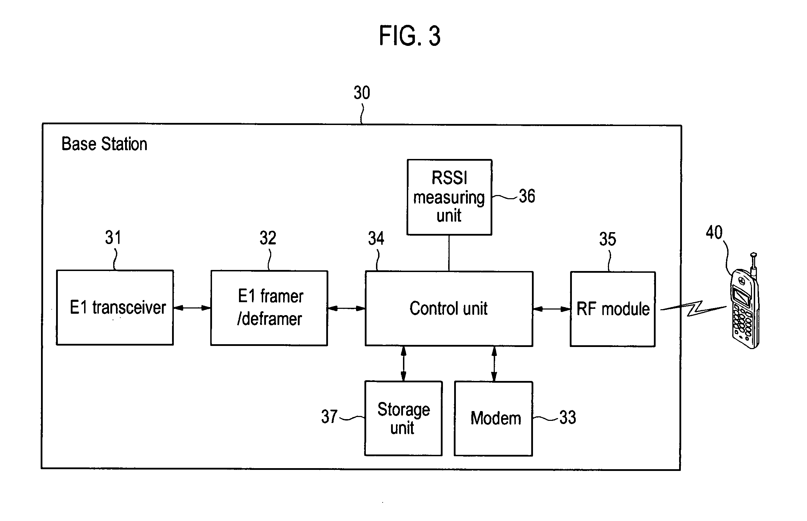

FIG. 3 is a view showing an internal configuration of the DECT base station 30 of FIG. 1. Other embodiments and configurations are also within the scope of the present invention. More specifically, FIG. 3 shows the base station 30 includes an E1 transceiver 31, an E1 framer/deframer 32, a modem 33, a control unit 34, an RF module 35, an RSSI measuring unit 36, and a storage unit 37. The E1 transceiver 31 may be connected to the WTIB 20 in an E1 manner and may transmit and receive voice signals and data signals. The E1 framer/deframer 32 may decode a signal received from the E1 transceiver 31 and encode a signal inputted from the control unit 34. A decoded signal may be output to the control unit 34, and an encoded signal may be output to the E1 transceiver 31. The modem 33 may modulate the signal decoded by the E1 framer/deframer 32 and demodulate signals input thereto. The modem 33 may modulate the decoded signal in a Gaussian frequency-shift keying (GFSK) scheme. A signal demodulated by the modem 33 may be provided to the E1 framer/deframer 32 under control of the control unit 34. The RF module 35 may receive the signal modulated by the modem 33 and transmit the modulated signal using a radio frequency to the handset 40. The RF module 35 may also receive a signal transmitted from the handset 40 and transmit the received signal to the control unit 34. The signal originated from the handset 40 may be demodulated by the modem 33 and may be transmitted to the E1 framer/deframer 32. The RSSI measuring unit 36 may measure RSSI values of even-numbered timeslots from among the downlink channel of a frame (10 ms) for ten available frequencies f0 to f9. The signal transmission among the E1 framer/deframer 32, the modem 33 and the RF module 35 may be performed under control of the control unit 34.

The storage unit 37 may store identification numbers for distinguishing the plurality of handsets 40 from each other, call/waiting states of the respective handsets, RSSI measurement results of the downlink channel, and state information of a channel that is set to a dummy bearer or a traffic bearer under control of the control unit 34. The storage unit 37 may also store information on time when the traffic bearer is created to start communication with the handset 40 and also to store information on time when the traffic bearer is removed to terminate the call of the handset 40, which are inputted from the control unit 34.

In the process of initialization or in case where any traffic bearer is not created since no event is generated, the control unit 34 may create a dummy bearer in one empty timeslot from among the even-numbered timeslots of the downlink channel and transmit dummy bearer information through the dummy bearer. When an event is generated and a traffic bearer is set, the control unit 34 may insert the dummy bearer information in a header of the traffic bearer, transmit the dummy bearer information through the traffic bearer, and remove the dummy bearer. Since the dummy bearer information is transmitted through the traffic bearer instead of the dummy bearer, the dummy bearer may be removed. Thereafter, when the traffic bearer is released, the control unit 34 may re-create the dummy bearer in one of the empty timeslots from among the even-numbered timeslots of the downlink channel and transmit dummy bearer information through the re-created dummy bearer. For re-creating the dummy bearer, the control unit 34 may select a timeslot having the smallest RSSI value from among the empty timeslots.

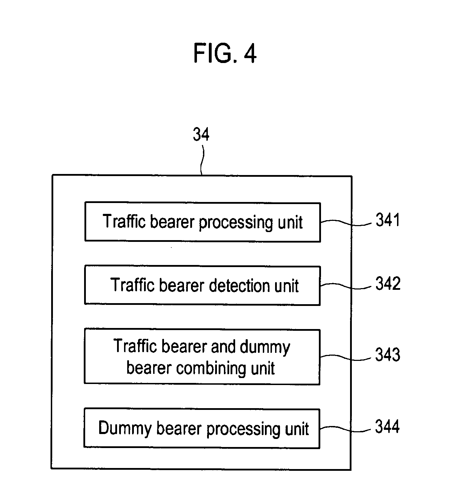

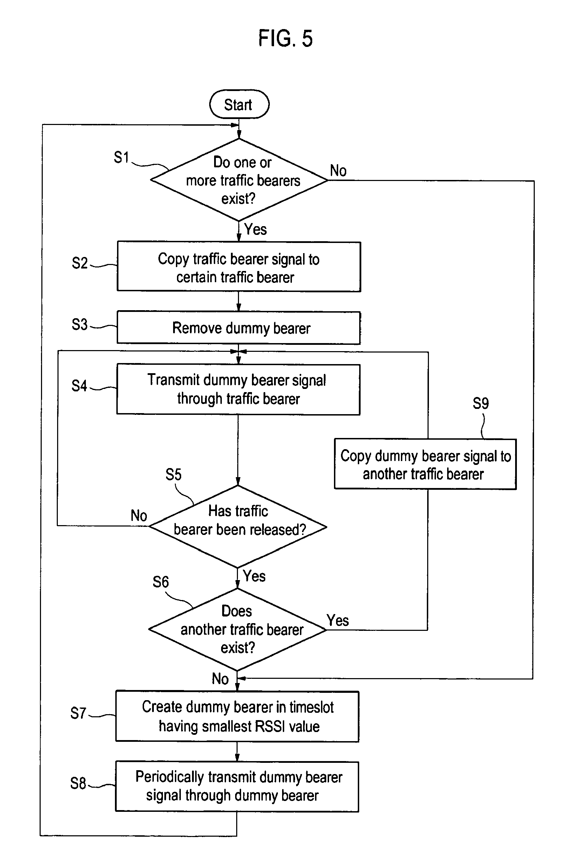

FIG. 4 is a view showing an internal configuration of the control unit 34 of FIG. 3. FIG. 5 is a flowchart showing a method of expanding channel capacity of a DECT base station according to an example embodiment of the present invention. Other embodiments and configurations are also within the scope of the present invention.

FIG. 4 shows that the control unit 34 may include a traffic bearer processing (or creation) unit 341, a traffic bearer detection unit 342, a traffic bearer and dummy bearer combining unit 343 and a dummy bearer processing unit 344.

As shown in FIGs. 4 and 5, in the process of initialization or when any traffic bearers are not created since no event is generated, the control unit 34 of the BS 30 may create a dummy bearer (operation S7 in FIG. 5), and load dummy bearer information on the dummy bearer, and transmit the dummy bearer information to the handset 40 through the RF module 35 (operation S8). More specifically, the dummy bearer processing unit 344 of the control unit 34 may select one of the empty timeslots (e.g., a timeslot having the smallest RSSI) from among the even-numbered timeslots of the downlink channel of a frame and create a dummy bearer.

The control unit 34 of the BS 30 may create a traffic bearer to transmit a voice signal to the handset 40 when an event is generated, load the voice signal on the traffic bearer, and transmit it to the handset 40 through the RF module 35. More specifically, when an event is generated, the traffic bearer processing unit 341 of the control unit 34 may select one of the timeslots not occupied by the other handsets from among the even-numbered timeslots of the downlink channel of a frame and create a traffic bearer.

As shown in FIG. 5, the BS 30 may determine whether there are one or more traffic bearers in operation S1. The traffic bearer detection unit 342 may determine states of all the even-numbered timeslots in a frame based on channel state information stored in the storage unit 37 and the traffic bearer detection unit 342 may detect whether any traffic bearers are created for other handsets and the number of the traffic bears, if any, in real time.

If it is determined that there are one or more traffic bearers, the control unit 34 of the BS 30 may insert dummy bearer information to the most recently created traffic bearer in operation S2. The control unit 34 of the BS 30 may select the most recently created traffic bearer by using information on a creation time of the traffic bearers stored in the storage unit 37. More specifically, the traffic bearer and dummy bearer combining unit 343 may insert dummy bearer information (e.g. synchronization information, ID information, a paging signal, a message, etc.) to the traffic bearer detected by the traffic bearer detection unit 342.

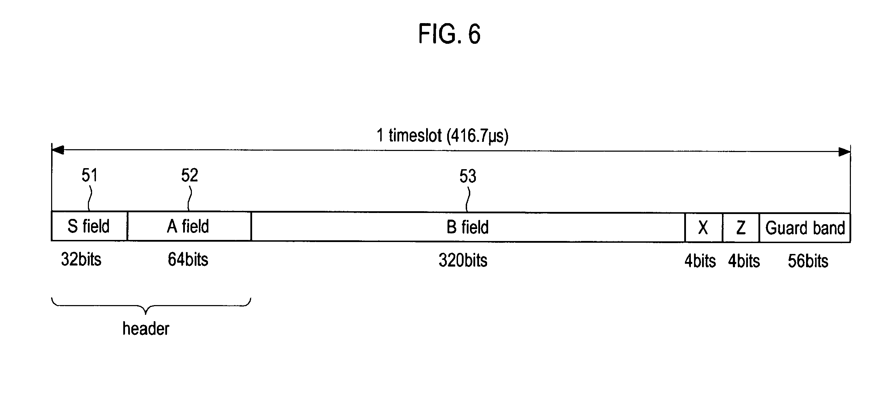

As shown in FIG. 6, a timeslot (wireless channel) may include an S field 51, an A field 52, a B field 53, an X field, a Z field, and a guard band. The S field 51 and the A field 52 are elements of a header. The S field 51 is a field for synchronizing the handset 40 with the BS 30, and may indicate the starting point of each timeslot. The A field 52 is a field used for ID information of the BS 30 for connection authority of the handset 40, a paging signal for calling the handset 40, and message exchange with the handset 40. The B field 53 is a field for transmitting a pulse code modulation (PCM) voice signal. The X field and the Z field may be used to detect an error, and the guard band may be used to prevent interference between channels. The traffic bearer and dummy bearer combining unit 343 may insert the dummy bearer information to the header of the traffic bearer (S and A fields).

If the dummy bearer information is completely inserted, the control unit 34 of the BS 30 may remove the existing dummy bearer in operation S3. More specifically, the traffic bearer and dummy bearer combining unit 343 may remove the dummy bearer after inserting the dummy bearer information to the traffic bearer. At this time, usage of the timeslot where the dummy bearer was created and occupied may be changed to voice communication of the handset 40, which is changed from the standby mode (or state) to the communication state. In this manner, occupation of timeslots for transmitting dummy bearer information may be reduced, and thus the number of available wireless channels that can be practically used by the handset 40 may be increased.

The control unit 34 of the BS 30 may periodically transmit the dummy bearer information through the traffic channel in operation S4. The dummy bearer information may be inserted in the S and A fields of the traffic bearer by the dummy bearer combining unit 343. The RF module 35 may periodically broadcast the dummy bearer information through the header of the traffic bearer to the handsets 40, which is in the standby mode (or state). The handsets 40 may receive, in real time, information on the BS 30 through the header of the traffic bearer of the other handset that is in voice communication.

The control unit 34 of the BS 30 may determine whether the traffic bearer is released (removed) in operation S5. If the traffic bearer is released (removed), the control unit 34 may determine whether another traffic bearer exists in operation S6. More specifically, the traffic bearer detection unit 342 of the control unit 34 may determine whether the traffic bearer is released and whether another traffic bearer exists based on the channel state information stored in the storage unit 37.

If it is detected that any traffic bearers do not exist, the control unit 34 may re-create a dummy bearer in an empty timeslot in operation S7. More specifically, the dummy bearer processing unit 344 of FIG. 4 may select a timeslot having the smallest RSSI from among the even-numbered timeslots of the downlink of a frame and re-create the dummy bearer in the selected timeslot.

The control unit 34 may periodically transmit (broadcast) the dummy bearer information through the re-created dummy bearer in operation S8.

If another traffic bearer exists in operation S6, the control unit 34 may insert the dummy bearer information to the traffic bearer in operation S9 and transmit the dummy bearer information through the traffic bearer in operation S4.

According to the aforementioned embodiments, the BS 30 may detect whether any traffic bearers exist or not, in real time, and a traffic bearer may be utilized as a dummy bearer (i.e., dummy bearer information is transmitted through the traffic bearer). Thus, an additional wireless channel for transmitting the dummy bearer information may not need to be set and the wireless channels may be used efficiently. The number of total available wireless channels may be expanded up to at least 60.

An apparatus for managing a wireless channel may be provided. The apparatus may include a dummy bearer processing unit configured to select a first timeslot in a downlink channel and to create a dummy bearer thereby, and a traffic bearer processing (or creation) unit configured to select a second timeslot in the downlink channel and to create a traffic bearer thereby upon detection of a communication event. The apparatus may include a traffic bearer detection unit configured to detect whether the traffic bearer is created, and a traffic bearer and dummy bearer combining unit configured to respond to the detection of the traffic bearer, to remove the dummy bearer, and to transmit dummy bearer information to a handset through the traffic bearer.

A method of managing a wireless channel may be provided that includes selecting a first timeslot in a downlink channel and creating a dummy bearer, transmitting dummy bearer information through the dummy bearer, detecting whether a traffic bearer is created in a second timeslot in the downlink channel, and removing the dummy bearer and transmitting the dummy bearer information to a handset through the traffic bearer in response to detection of the traffic bearer.

A digital enhanced cordless telecommunication (DECT) base station may also be provided that includes an RF module providing a wireless interface with a handset, a storage unit for storing channel state information for transmitting and receiving a signal to and from the handset, an RSSI measuring unit for measuring an RSSI of a timeslot in a downlink channel, and a control unit for selecting a first timeslot in the downlink channel, creating a dummy bearer based on the channel state information, detecting whether a traffic bearer is created in a second timeslot of the downlink channel, removing the dummy bearer and transmitting dummy bearer information to the handset through the traffic bearer in response to the detection.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. An apparatus for managing a wireless channel, the apparatus comprising:
a dummy bearer processing unit to select a first timeslot in a downlink channel and to create a dummy bearer in the first timeslot;
a traffic bearer processing unit to select a second timeslot in the downlink channel and to create a traffic bearer in the second timeslot upon detection of a communication event;
a traffic bearer detection unit to detect whether the traffic bearer is created; and
a traffic bearer and dummy bearer combining unit to respond to the detection of the traffic bearer by the traffic bearer detection unit, to remove the dummy bearer, and to transmit dummy bearer information to a handset through the traffic bearer.

2. The apparatus of claim 1, wherein the traffic bearer and dummy bearer combining unit to insert the dummy bearer information in a header of the traffic bearer, to remove the dummy bearer created in the first timeslot, and to change usage of the first timeslot to voice communication.

3. The apparatus of claim 1, wherein the communication event includes one of an attempt of the handset to call a base station, an attempt of the base station to call the handset and a response of the handset to the call from the base station, and
the dummy bearer information includes one of information on synchronization with the handset, information on identification (ID) of a base station to which the handset is to be connected, a paging signal for calling the handset, and information on a message exchange with the handset.

4. The apparatus of claim 1, wherein the downlink channel has an even-number of timeslots, and the first timeslot and the second timeslot are selected based on a received signal strength indication (RSSI) value from timeslots that are unused from among the even-numbered timeslots of the downlink channel.

5. The apparatus of claim 1, wherein the traffic bearer and dummy bearer combining unit to transmit the dummy bearer information to the handset through the dummy bearer when the apparatus is in one of a plurality of pre-determined states, wherein the pre-determined states include a state of initialization and a state where the traffic bearer is not created since the event is not generated.

6. The apparatus of claim 1, further comprising:
an RF module to provide a wireless interface with the handset;
a storage unit to store channel state information for transmitting and receiving signals to and from the handset; and
an RSSI measuring unit to measure a received signal strength indication (RSSI) of a timeslot of the downlink channel.

7. A method of managing a wireless channel, comprising:
selecting a first timeslot in a downlink channel;
creating a dummy bearer in the first timeslot;
transmitting dummy bearer information through the dummy bearer;
detecting whether a traffic bearer is created in a second timeslot in the downlink channel; transmitting the dummy bearer information to a handset through the traffic bearer in response to detection of the traffic bearer, and
removing the dummy bearer prior to transmitting the dummy bearer information.

8. The method of claim 7, wherein the traffic bearer is created in the second timeslot when one of a plurality of communication events occurs, and the plurality of communication events include an attempt of the handset to call to a base station, an attempt of the base station to call the handset and a response of the handset to the call from the base station.

9. The method of claim 7, wherein transmitting the dummy bearer information comprises:
inserting the dummy bearer information into a header of the traffic bearer,
removing the dummy bearer created in the first timeslot, and
changing usage of the first timeslot to voice communication.

10. The method of claim 7, further comprising re-creating the dummy bearer and transmitting the dummy bearer information to the handset through the dummy bearer when the traffic bearer is released.

11. The method of claim 7, wherein the dummy bearer information includes one of information on synchronization with the handset, information on identification (ID) of a base station to which the handset is to be connected, a paging signal for calling the handset, and information on a message exchange with the handset, andand the first timeslot and the second timeslot are selected from unused timeslots from among even-numbered timeslots of the downlink channel based on a received signal strength indication (RSSI) value.

12. The method of claim 7, further comprising transmitting the dummy bearer information to the handset through the dummy bearer in an initialization process or when the traffic bearer has not been created since an event has not occurred.

13. A digital enhanced cordless telecommunication (DECT) base station comprising:
an RF module to provide a wireless interface with a handset;
a storage unit to store channel state information for transmitting a signal to the handset and receiving a signal from the handset;
an RSSI measuring unit to measure a received signal strength indication (RSSI) of a timeslot in a downlink channel; and
a control unit to select a first timeslot in the downlink channel, to create a dummy bearer based on the channel state information, to detect whether a traffic bearer is created in a second timeslot of the downlink channel, to remove the dummy bearer and to transmit dummy bearer information to the handset through the traffic bearer in response to the detection of the traffic bearer.

14. The DECT base station of claim 13, wherein the control unit includes:
a dummy bearer processing unit to select the first timeslot and to create the dummy bearer in the first timeslot;
a traffic bearer processing unit to select the second timeslot and to create the traffic bearer when an event related to a communication call is generated;
a traffic bearer detection unit to detect whether the traffic bearer is created; and
a traffic bearer and dummy bearer combining unit to remove the dummy bearer and to transmit the dummy bearer information to the handset through the traffic bearer in response to the detection of the traffic bearer by the traffic bearer detection unit.

15. The DECT base station of claim 13, wherein the traffic bearer and dummy bearer combining unit to insert the dummy bearer information to a header of the traffic bearer, to remove the dummy bearer created in the first timeslot, to change usage of the first timeslot to voice communication, and to transmit the dummy bearer information to the handset through the dummy bearer in an initialization process or when the traffic bearer has not been created since an event has not occurred, and the dummy bearer processing unit to re-create the dummy bearer, and the dummy bearer information is broadcasted to the handset through the dummy bearer when the traffic bearer is released.
